# EUROPÄISCHE PATENTSCHRIFT

(11) **EP 3 270 278 B1**
(45) Veröffentlichungstag und Bekanntmachung des Hinweises auf die Patenterteilung: **24.06.2020**
(21) Anmeldenummer: 16179496.1
(22) Anmeldetag: 14.07.2016
(51) Int. Cl.: G06F 3/0485

(54) **VERFAHREN ZUM BETREIBEN EINES BEDIENSYSTEMS UND BEDIENSYSTEM**
METHOD FOR OPERATING AN OPERATING SYSTEM AND OPERATING SYSTEM
PROCEDE DE FONCTIONNEMENT D'UN SYSTEME DE COMMANDE ET SYSTEME DE COMMANDE

(43) Veröffentlichungstag der Anmeldung: 17.01.2018
(73) Patentinhaber: Volkswagen Aktiengesellschaft, 38440 Wolfsburg (DE)
(72) Erfinder: Chudzinski, Filip Piotr, 20255 Hamburg (DE)
(74) Vertreter: Reitstötter Kinzebach

(56) Entgegenhaltungen:
- DE-A1-102010 020 893
- US-A1- 2012 297 304
- US-A1- 2016 004 432

## Beschreibung

Die vorliegende Erfindung betrifft ein Verfahren zum Betreiben eines Bediensystems und ein Bediensystem.

Die Bedienung elektronischer Einrichtungen erfolgt häufig mittels grafischer Bedienoberflächen, mittels derer bei Einrichtungen mit einem großen Funktionsumfang eine Vielzahl von Funktionalitäten zugänglich sein kann. Insbesondere wird den Insassen moderner Fahrzeuge eine Fülle von Informationen sowie Einstell- und Bedienmöglichkeiten angeboten. Diese Vielfalt führt jedoch häufig zu einer mangelnden Übersichtlichkeit der Bedienoberfläche, vor allem dann, wenn der Zugriff auf viele Funktionen gleichzeitig gewährleistet werden soll. Insbesondere kann dies durch die begrenzten Abmessungen von Anzeigeflächen für die grafische Bedienoberfläche bedingt sein.

Es ist daher wünschenswert, eine Bedienung der verschiedenen Funktionen des Fahrzeugs und darin bedienbaren Informationssysteme bereitzustellen, welche schnell und einfach zugänglich und dabei übersichtlich ist.

Bei dem in der US 2015/0177946 A1 beschriebenen System zur Anzeige von Audio-, Video- und Navigationsinhalten in einem Fahrzeug ist vorgesehen, dass Schaltflächen einer Bedienoberfläche in Abhängigkeit von Vibrationen oder einer Neigung der Fahrzeugs vergrößert werden, um ihre Bedienung zu vereinfachen.

Die WO 2014/017722 A1 schlägt eine Anzeigevorrichtung vor, bei der mehrere Fenster angezeigt werden können. Dabei werden die Fenster hintereinander angezeigt und ein Fenster kann mittels einer Berührung in den Vordergrund gebracht werden.

Die DE102010020893 betrifft ein Verfahren wobei mittels einer Steuervorrichtung ein Übergang von einer ersten Darstellung in eine zweite Darstellung auf der Anzeigefläche erzeugt wird, wobei bei diesem Übergang zumindest ein erstes grafisches Objekt auf der Anzeigefläche bewegt wird, und in der zweiten Darstellung zumindest ein zweites grafisches Objekt anhand einer Eingabe in einem Bewegungsmuster bewegt wird, um die Eingabe zu visualisieren.

Die US2016004432 (Fig. 11I-11J) und die US2012297304 (Fig. 2) betreffen beide eine mobile elektronische Einrichtung mit einer grafischen Bedienoberfläche die eine Bedienoberflächenerstreckung entlang einer ersten Richtung aufweist, wobei jederzeit nur ein Ausschnitt der grafischen Bedienoberfläche mittels einer Anzeigeeinheit angezeigt wird.

Der vorliegenden Erfindung liegt die Aufgabe zugrunde, ein Verfahren zum Betreiben eines Bediensystems und ein Bediensystem bereitzustellen, die eine besonders einfache und schnelle Bedienung erlauben und einem Nutzer die Orientierung innerhalb einer grafischen Bedienoberfläche erleichtern.

Erfindungsgemäß wird diese Aufgabe durch ein Verfahren mit den Merkmalen des Anspruchs 1 und ein Bediensystem mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren werden Grafikdaten einer grafischen Bedienoberfläche erzeugt, wobei die grafische Bedienoberfläche eine Bedienoberflächenerstreckung entlang einer ersten Richtung aufweist. Mittels einer Anzeigeeinheit wird ein Ausschnitt der grafischen Bedienoberfläche angezeigt, wobei der Ausschnitt eine Ausschnittserstreckung entlang der ersten Richtung aufweist. Dabei weist das Bediensystem zumindest zwei Zustände auf, wobei jedem Zustand ein bestimmter Ausschnitt der grafischen Bedienoberfläche zugeordnet ist. Dabei wird, wenn einer der zumindest zwei Zustände des Bediensystems aktiviert ist, der dem aktivierten Zustand zugeordnete Ausschnitt der grafischen Bedienoberfläche angezeigt. Ferner wird ein Zustandsinformationselement so angesteuert, dass der aktivierte Zustand des Bediensystems ausgegeben wird, wobei das Zustandsinformationselement einen Umriss einer geometrischen Figur umfasst und in Abhängigkeit von dem aktivierten Zustand ein Segment des Umrisses hervorgehoben wird.

Dadurch kann einerseits eine grafische Bedienoberfläche zugänglich gemacht werden, deren Abmessungen für die Anzeigeeinheit zu groß sind. Andererseits wird dem Nutzer vorteilhafterweise leicht und schnell erfassbar ausgegeben, welcher Zustand des Bediensystems gerade aktiviert ist, das heißt, welcher Ausschnitt der Bedienoberfläche angezeigt wird.

Als "Bedienoberfläche" im Sinne der Erfindung wird eine Darstellung für eine Mensch-Maschine-Schnittstelle bezeichnet. Dabei sind technische Einrichtungen mittels Steuerelementen bedienbar, wozu etwa Schaltflächen oder Symbole der Darstellung verwendet werden können. Insbesondere kann die Bedienoberfläche Schalt- und Bedienelemente umfassen, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Nutzer interpretierbare Ausgabe ermöglichen.

Insbesondere kann eine Hauptanzeige als grafische Bedienoberfläche dargestellt werden. Eine "Hauptanzeige" ist dabei eine Anzeige, die insbesondere dann angezeigt wird, wenn eine Anzeigevorrichtung, zu welcher die Anzeigefläche gehört, eingeschaltet wird. Dabei kann die Hauptanzeige optional vom Nutzer selbst konfiguriert werden. Insbesondere kann der Nutzer für unterschiedliche Themen unterschiedliche Hauptanzeigen konfigurieren. Dabei wird dann bei einem Themenwechsel die zugehörige Hauptanzeige angezeigt. Eine Hauptanzeige wird im Allgemeinen auch als Home-Screen bezeichnet.

Die Bedienoberfläche kann insbesondere Widget-Objekte umfassen. Unter einem "Widget-Objekt" wird ein Objekt verstanden, welches grafisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem bestimmten Teilbereich der Bedienoberfläche Informationen einer Einrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Bedienoberfläche dargestellt. Wird ein Anzeigefenster als Widget-Objekt implementiert, so können auch die grafischen Objekte in dem Anzeigefenster Widget-Objekte sein. Dabei hat der Nutzer über das Anzeigefenster Zugang zu anderen Widget-Objekten.

Dabei kann die erste Richtung, entlang derer die Bedienoberflächenerstreckung verläuft, auf verschiedene Weisen definiert sein, wobei die Dimensionen der grafischen Bedienoberfläche in verschiedene Richtungen betrachtet werden. Insbesondere verläuft die erste Richtung entlang einer Breitenerstreckung der Anzeigeeinheit. Dadurch wird dem Nutzer vorteilhafterweise eine besonders einfach erfassbare und bedienbare räumliche Orientierung ermöglicht.

Dabei wird als Richtung der Breitenerstreckung eine aus Perspektive des Nutzers horizontale Richtung betrachtet, sodass seitliche Ausschnitte definiert werden. Beispielsweise kann die Bedienoberfläche mittels einer Anzeigeeinheit angezeigt werden, die eine Anzeigefläche mit einer Breite und einer Höhe aufweist. Hier entspricht der Wechsel des Ausschnitts, insbesondere beim Wechsel zwischen verschiedenen Zuständen des Bediensystems, einem seitlichen Verschieben des Ausschnitts relativ zur Breitenerstreckung der Bedienoberfläche. Insbesondere kann die Erstreckung der Bedienoberfläche in eine andere Richtung berücksichtigt werden, etwa eine Höhe oder eine Querrichtung. Ferner können insbesondere auch verschiedene Richtungen zugleich berücksichtigt werden, etwa die Breite und Höhe der Bedienoberfläche. Somit kann zwischen Ausschnitten in verschiedene Richtungen gewechselt werden.

Ein "Ausschnitt" der grafischen Bedienoberfläche umfasst erfindungsgemäß einen zusammenhängenden Teil der grafischen Darstellung. Dabei reicht der Ausschnitt insbesondere von einer ersten zu einer zweiten Position entlang der ersten Richtung. Beispielsweise kann der Ausschnitt anhand zweier Positionen entlang der Breite oder Höhe der Bedienoberfläche definiert sein. Es können zwei oder mehr Zustände vorgesehen sein, denen jeweils ein Ausschnitt zugeordnet ist.

Gemäß einer Weiterbildung ist die Ausschnittserstreckung kleiner oder gleich der Breite einer Anzeigefläche der Anzeigeeinheit. Dadurch kann vorteilhafterweise der Ausschnitt in Abhängigkeit von der Anzeigefläche so gewählt werden, dass die grafische Bedienoberfläche durch Ausschnitte sinnvoll unterteilt wird. Insbesondere ist für alle Ausschnitte die gleiche Ausschnittserstreckung, etwa die gleiche Breite des Ausschnitts, vorgesehen.

Beispielsweise kann eine Bedienoberfläche so gebildet sein, dass die Bedienoberflächenerstreckung kleiner oder gleich dem Doppelten der vorgesehenen Ausschnittserstreckung ist. Beispielsweise kann die Breite der Bedienoberfläche doppelt so groß wie die Breite der Ausschnitte sein. In diesem Fall können insbesondere zwei Ausschnitte vorgesehen sein, wobei der eine von dem linken Rand der Bedienoberfläche bis zur Mitte und der andere von der Mitte bis zum rechten Rand der Bedienoberfläche reicht. Ist die gesamte Breite der Bedienoberfläche kleiner als doppelt so groß wie die Breite der Ausschnitte, so entsteht ein Überschneidungsbereich. In analoger Weise können die Ausschnitte definiert sein, wenn die Breite der Bedienoberfläche ein beliebiges Vielfaches der Breite der Ausschnitte beträgt. Ferner können in analoger Weise Ausschnitt in einer anderen Richtung definiert sein, etwa wenn Ausschnitte mit Bezug auf die Höhe der Bedienoberfläche definiert sind.

Der derzeit angezeigte Ausschnitt wird erfindungsgemäß mittels des Zustandsinformationselements angezeigt. Dieses kann auf verschiedene Weise ausgeführt beispielsweise mittels eines durch die Anzeigeeinheit angezeigten grafischen Objekts oder mittels einer Leuchtanzeige. Ferner kann es nach an sich bekannter Weise als analoge Anzeige ausgebildet sein.

Das Zustandsinformationselement umfasst erfindungsgemäß einen Umriss einer geometrischen Figur. Dabei ist insbesondere eine ebene geometrische Figur vorgesehen, es können aber auch dreidimensionale Effekte dargestellt sein. Die geometrische Figur kann beispielsweise ein Kreis oder ein Polygon sein. Insbesondere kann dabei eine Symmetrie verwendet werden, beispielsweise eine Symmetrie gegenüber einer Rotation oder eine diskrete Symmetrie gegenüber Rotation um einen bestimmten Winkel.

Der aktivierte Zustand wird angezeigt, indem ein Segment des Umrisses hervorgehoben wird. Das Segment umfasst beispielsweise einen bestimmten Abschnitt des Umrisses und kann etwa anhand eines Start- und eines Endwinkels definiert sein. Ferner kann das Segment anhand einer Start- und einer Endposition des Umrisses definiert sein.

Das hervorgehobene Segment des Umrisses wird insbesondere so bestimmt, dass es geeignet ist, einem Nutzer anzuzeigen, welcher Ausschnitt der grafischen Bedienoberfläche derzeit angezeigt wird, insbesondere welchen Bereich der Ausschnitt relativ zur gesamten Bedienoberflächenerstreckung umfasst. Ferner können Überschneidungen der Ausschnitte verdeutlicht werden, indem die jeweils hervorhebbaren Segmente des Umrisses Überschneidungen zueinander aufweisen. Beispielsweise kann eine rechte oder linke Hälfte des Umrisses hervorgehoben werden, je nachdem, ob eine linke oder rechte Hälfte der grafischen Bedienoberfläche angezeigt wird. In analoger Weise kann zum Beispiel ein oberer oder unterer Teil des Umrisses hervorgehoben werden, also die obere oder untere Hälfte, wenn von dem dargestellten Ausschnitt die obere oder untere Hälfte der Bedienoberfläche umfasst ist.

Die Hervorhebung kann dabei auf an sich bekannte Weise erfolgen, insbesondere mittels einer Lichtemission. Beispielsweise kann das hervorgehobene Segment relativ zu seiner Umgebung Licht einer anderen Farbe, Intensität und/oder weiterer Parameter emittieren. Ferner kann ein dynamischer Effekt vorgesehen sein, etwa ein Blinken oder eine andere dynamische Veränderung der Intensität oder weiterer Lichtparameter. Der nicht hervorgehobene Teil des Zustandsinformationselements kann entweder nicht dargestellt werden oder so, dass ein Kontrast zu dem hervorgehobenen Segment deutlich wird.

Gemäß einer Ausbildung der Erfindung umfasst das Zustandsinformationselement einen vollständig oder teilweise ausgebildeten Ring. Damit wird vorteilhafterweise eine besonders leicht und schnell erfassbare Darstellung erzeugt.

Der vollständig ausgebildete Ring entspricht dabei insbesondere dem mit einer bestimmten Dicke ausbildeten Umriss eines Kreises. Entsprechend entspricht der teilweise ausgebildete Ring einem Ringsegment, welches insbesondere einen anhand eines Start- und Endwinkels definierten Abschnitt des Rings umfasst. Insbesondere kann ein teilweise ausgebildeter Ring eine spiegelsymmetrische Form aufweisen, etwa als nach oben oder unten teilweise offener Teil-Ring.

Analog zu der ganz oder teilweise geschlossenen Darstellung eines von einer Kreisform abgeleiteten Rings kann das Zustandsinformationselement einen vollständig oder teilweise geschlossen ausgebildeten Umriss eines Polygons umfassen. Dabei kann das Polygon so ausgebildet sein, dass seine Form und insbesondere die Lage seiner Kanten und/oder Ecken eine Anordnung von darstellbaren Ausschnitten der grafischen Bedienoberfläche repräsentieren.

Gemäß einer weiteren Ausbildung wird eine Bedienhandlung erfasst und in Abhängigkeit von der Bedienhandlung wird ein anderer als der aktuell aktivierte Zustand des Bediensystems aktiviert. Dadurch wird vorteilhafterweise eine Bedienmöglichkeit geschaffen, die eine Navigation über verschiedene Ausschnitte der Bedienoberfläche ermöglicht.

Die Bedienhandlung kann dabei auf an sich bekannte Weise erfasst werden, etwa mittels eines Bedienelements oder einer Bediengeste, die beispielsweise durch eine Gestenerfassungseinheit oder eine berührungsempfindliche Oberfläche eines Bedienelements erfasst werden kann. In Abhängigkeit von der Bedienhandlung kann der Wechsel zwischen verschiedenen Zuständen des Bediensystems auf verschiedene Weise erfolgen, wobei insbesondere bei einem anderen Zustand auch ein anderer Ausschnitt der Bedienoberfläche angezeigt wird.

Insbesondere kann der Wechsel des Zustands bei einer Geste so erfolgen, dass eine durch die Geste ausgezeichnete Richtung, etwa bei einer Wischgeste mit einer Bewegung von einer Start- zu einer Endposition, in eine räumliche Beziehung der mit den Zuständen verbundenen Ausschnitte relativ zur Bedienoberfläche umgesetzt wird. Beispielsweise kann eine Wischgeste nach rechts oder links dazu führen, dass ein Zustand aktiviert wird, bei dem ein neuer Ausschnitt so angezeigt wird, dass ein Bereich der Bedienoberfläche rechts beziehungsweise links von dem zunächst angezeigten Ausschnitt dargestellt wird.

Gemäß einer weiteren Weiterbildung wird die Bedienhandlung anhand eines Bedienelements erfasst, wobei das Zustandsinformationselement bei dem Bedienelement angeordnet ist. Damit wird vorteilhafterweise der Zustand dort angezeigt, wo eine Bedienhandlung zum Ändern des Zustands vorgenommen werden kann.

Das Bedienelement kann auf an sich bekannte Weise gebildet sein. Es kann beispielsweise einen analogen Schalter, Tastschalter oder Regler umfassen. Es kann ferner eine Schaltfläche der grafischen Bedienoberfläche umfassen.

Unter einer "Schaltfläche" der grafischen Bedienoberfläche wird im Sinne der Erfindung ein Steuerelement der graphischen Benutzerschnittstelle verstanden. Eine Schaltfläche unterscheidet sich von Elementen und Flächen zur reinen Informationsanzeige, sogenannten Anzeigeelementen, darin, dass sie betätigt werden kann, wobei sie insbesondere markierbar und auswählbar ist. Dazu kann beispielsweise ein Tippen eines Nutzers mit einem Finger an einer der Schaltfläche entsprechenden Position auf einem Touchscreen verwendet werden, um die Schaltfläche zu betätigen. Ferner kann die Betätigung mittels anderer Einrichtungen, etwa eines Touchpads, einer Tastatur, einer Maus oder mittels Gesten in einem Erfassungsraum erfolgen.

Bei einer Markierung eines Schaltfläche kann diese hervorgehoben dargestellt werden, etwa durch eine graphische Hervorhebung gegenüber nicht markierten Schaltflächen und/oder Anzeigeelementen. Ferner kann eine markierte Schaltfläche mittels einer Bedienhandlung ausgewählt werden. Bei einer Auswahl einer Schaltfläche wird eine ihr zugeordnete Funktion ausgeführt. Die Funktion kann nur zu einer Veränderung der Informationsanzeige führen. Ferner können über Schaltflächen Einrichtungen gesteuert werden, deren Bedienung von der Informationsanzeige unterstützt wird. Eine Schaltfläche kann somit herkömmliche einen mechanischen Schalter ersetzen.

Bei einer Weiterbildung umfasst die Eingabeeinrichtung eine ortsaufgelöste Berührungserfassungseinrichtung, durch welche die Position einer Berührung auf der Anzeigefläche bestimmt wird und diese Position einer Schaltfläche der graphischen Bedienoberfläche zugeordnet wird, wobei die Schaltfläche markiert und/oder ausgewählt wird.

Das Zustandsinformationselement kann sich dabei auf eine dem Bedienelement zugeordneten Fläche erstrecken, etwa auf die von einem Schalter oder einer Schaltfläche eingenommene Fläche. Es kann ferner in der Umgebung des Bedienelements angeordnet sein, insbesondere in einem Bereich, der geeignet ist, dem Nutzer eine Zuordnung zwischen dem Zustandsinformationselement um dem Bedienelement zu signalisieren.

Gemäß einer Ausbildung weist das Bedienelement einen Bedienelementrand auf und das Zustandsinformationselement verläuft entlang des Bedienelementrandes. Dadurch kann vorteilhafterweise eine besonders klar und deutlich erfassbare Verbindung zwischen dem Bedienelement und der von dem Zustandsinformationselement ausgegebenen Information hergestellt werden.

Insbesondere weist das Bedienelement selbst einen Umriss auf, der so gebildet ist, dass er dem Umriss des Zustandsinformationselements entspricht. Die geometrische Figur kann dabei wenigstens teilweise von der Form des Bedienelements umfasst sein. Beispielsweise kann das Bedienelement einen kreisrunden Umriss aufweisen, während das Zustandsinformationselement einen vollständig oder teilweise ausgebildeten Ring umfasst. In ähnlicher Weise kann ein polygonaler Umriss des Zustandsinformationselements auch von dem Umriss des Bedienelements umfasst sein.

Ferner können das Bedienelement und das Zustandsinformationselement verschiedene geometrische Formen aufweisen, sodass ihre Umrisse nicht genau parallel zueinander verlaufen. Insbesondere können polygonale und Kreisformen verwendet werden, wobei beispielsweise das Zustandsinformationselement als Ring um ein Bedienelement mit polygonalem Umriss angeordnet sein kann; die Formen können in analoger Weise umgekehrt oder in Mischformen verwendet werden.

Das Zustandsinformationselement kann sich insbesondere auf eine Fläche erstrecken, die von dem Bedienelement eingenommen wird. Beispielsweise kann es auf einer Schaltfläche oder einer Oberfläche eines Schalters angeordnet sein. Andererseits kann es sich auf eine Fläche außerhalb der von dem Bedienelement eingenommenen Fläche erstrecken, beispielsweise innerhalb eines bestimmten Radius. Der Verlauf "entlang" des Bedienelementrandes kann dabei sowohl in einem bestimmten Abstand als auch direkt angrenzend ausgebildet sein.

Gemäß einer weiteren Ausbildung umfasst die Bedienhandlung eine Wischgeste und beim Aktivieren des anderen Zustands des Bediensystems wird in Abhängigkeit von der Wischgeste ein dynamisches Verschieben des Ausschnitts ausgegeben. Dadurch wird vorteilhafterweise eine besonders intuitive und einfach erfassbare Rückmeldung für die Bedienhandlung gegeben.

Beispielsweise kann der angezeigte Ausschnitt von einem zum anderen Zustand kontinuierlich verschoben werden. Dabei kann insbesondere der durch den Ausschnitt dargestellte Bereich in eine von der Wischgeste ausgezeichnete Richtung verschoben werden und die Geschwindigkeit dieser Verschiebung kann der Geschwindigkeit der Wischgeste folgen, insbesondere kann sie zu dieser proportional sein.

Ferner kann vorgesehen sein, dass auch beim Ändern des Zustands anhand anderer Bedienhandlungen ein dynamisches Verschieben des angezeigten Ausschnitts ausgegeben wird. Insbesondere kann vorgesehen sein, dass beim Betätigen eines Schalters oder einer Schaltfläche der Zustand verändert wird und dass die Veränderung des angezeigten Ausschnitts mittels eines dynamischen Übergangs angezeigt wird, insbesondere durch ein kontinuierliches Verschieben des angezeigten Ausschnitts entlang der Bedienoberflächenerstreckung.

Gemäß einer weiteren Weiterbildung wird in Abhängigkeit vom Aktivieren des anderen Zustands des Bediensystems ein anderes Segment des von dem Zustandsinformationselement umfassten Umrisses hervorgehoben, wobei ein dynamisches Verschieben hervorgehobenen Segments erzeugt wird. Dadurch wird vorteilhafterweise der Zustandswechsel besonders gut erfassbar ausgegeben.

Beispielsweise kann ein kontinuierlicher Übergang bei der Hervorhebung verschiedener Segmente des Zustandsinformationselements erzeugt werden. Beispielsweise kann eine dynamische Darstellung erzeugt werden, bei welcher das zunächst hervorgehobene Segment eine kontinuierliche Bewegung zur Position des anschließend hervorgehobenen Segments beschreibt. Die Hervorhebung springt also beim Wechsel des Zustands nicht vom einen zum anderen Segment um, sondern es kann eine Bewegung dargestellt werden, welche die Aufmerksamkeit des Nutzers besonders deutlich auf den Vorgang des Zustandswechsels und den damit verbundenen Wechsel des angezeigten Ausschnitts lenkt.

Insbesondere kann das dynamische Verschieben des hervorgehobenen Segments des Umrisses des Zustandsinformationselements synchron oder zumindest gemeinsam mit einem dynamischen Verschieben des Ausschnitts erfolgen. In diesem Fall können die oben beschriebenen dynamischen Übergänge zwischen verschiedenen aktivierten Zuständen des Bediensystems kombiniert werden.

Gemäß einer Ausbildung umfasst die grafische Bedienoberfläche einen Navigationsbereich und einen Anwendungsbereich, wobei der Navigationsbereich unabhängig von dem angezeigten Ausschnitt mittels der Anzeigeeinheit angezeigt wird. Dadurch wird vorteilhafterweise erreicht, dass ein bestimmter Bereich dauerhaft angezeigt wird, während ein weiterer Bereich flexibel durch geeignete Wahl des Ausschnitts gestaltet werden kann. Dabei können beide Bereiche von der grafischen Bedienoberfläche umfasst sein.

Insbesondere kann der Navigationsbereich Bedienelemente umfassen, die beispielsweise den Wechsel zwischen den Zuständen des Bediensystems erlauben. Ferner kann der Navigationsbereich auch Anzeige- und Bedienelemente umfassen, durch die bestimmte Inhalte und bestimmte Bedienmöglichkeiten unabhängig vom derzeit aktivierten Zustand bereitgestellt werden können.

Ferner kann der Anwendungsbereich Anzeige- und Bedienelemente umfassen, wobei beim Wechsel zwischen verschiedenen Zuständen auch der angezeigte Ausschnitt verändert wird und die bereitgestellten Anzeige- und Bedienelemente flexibel variiert werden können. Insbesondere können hierbei auch Widget-Elemente umfasst sein sowie Anwendungsfenster, wobei anhand eines Anwendungsfensters ein bestimmter Bereich der grafischen Bedienoberfläche für grafische Anzeigen und Bedienmöglichkeiten einer bestimmten Anwendung verwendet werden kann.

Gemäß einer weiteren Ausbildung sind ferner Grafikdaten einer grafischen Vollbilddarstellung erzeugbar und anzeigbar. Dabei wird das Zustandsinformationselement so angesteuert, dass mehrere Segmente des Umrisses oder der gesamte Umriss hervorgehoben wird. Dadurch wird vorteilhafterweise signalisiert, dass der angezeigte Ausschnitt die gesamte Fläche der Vollbilddarstellung umfasst.

Als "Vollbilddarstellung" wird dabei eine Darstellung bezeichnet, die einen bestimmten Bereich der Anzeigefläche einnimmt. Beispielsweise kann der bestimmte Bereich die gesamte Fläche der Anzeigefläche sein oder der oben erläuterte Anwendungsbereich. Insbesondere wird eine Vollbilddarstellung so erzeugt, dass alle einer bestimmten Anwendung zugeordneten Grafikdaten von dem angezeigten Ausschnitt umfasst sind. Es ist also insbesondere lediglich ein anzeigbarer Ausschnitt vorgesehen.

In diesem Fall ist vorgesehen, dass durch das Zustandsinformationselement signalisiert wird, dass die Zustände des Bediensystems nicht mit verschiedenen Ausschnitten verknüpft sind, da hier keine verschiedenen Ausschnitte vorgesehen sind. Dazu kann der gesamte Umriss des Zustandsinformationselements hervorgehoben werden oder es können mehrere Segmente, die außerhalb der Vollbilddarstellung Zustände mit verschiedenen Ausschnitten repräsentieren, hervorgehoben werden.

Das erfindungsgemäße Bediensystem umfasst eine Recheneinheit, durch die Grafikdaten einer grafischen Bedienoberfläche erzeugbar sind, wobei die grafische Bedienoberfläche eine Bedienoberflächenerstreckung entlang einer ersten Richtung aufweist. Es umfasst ferner eine Anzeigeeinheit, durch die ein Ausschnitt der grafischen Bedienoberfläche anzeigbar ist, wobei der Ausschnitt eine Ausschnittserstreckung entlang der ersten Richtung aufweist. Dabei weist das Bediensystem zumindest zwei Zustände auf, wobei jedem Zustand ein bestimmter Ausschnitt der grafischen Bedienoberfläche zugeordnet ist. Dabei ist, wenn einer der zumindest zwei Zustände des Bediensystems aktiviert ist, der dem aktivierten Zustand zugeordnete Ausschnitt der grafischen Bedienoberfläche anzeigbar. Ferner ist ein Zustandsinformationselement so ansteuerbar, dass der aktivierte Zustand des Bediensystems ausgebbar ist. Dabei umfasst das Zustandsinformationselement einen Umriss einer geometrischen Figur und ist in Abhängigkeit von dem aktivierten Zustand ein Segment des Umrisses hervorhebbar.

Das erfindungsgemäße Bediensystem ist insbesondere ausgebildet, das vorstehend beschriebene erfindungsgemäße Verfahren zu implementieren. Das Bediensystem weist somit dieselben Vorteile auf wie das erfindungsgemäße Verfahren.

Gemäß einer Ausbildung des erfindungsgemäßen Bediensystems ist durch eine Erfassungseinheit eine Bedienhandlung erfassbar, wobei in Abhängigkeit von der Bedienhandlung ein anderer als der aktuell aktivierte Zustand des Bediensystems aktivierbar ist. Dies erlaubt vorteilhafterweise einen von einem Nutzer gesteuerten Wechsel zwischen verschiedenen Zuständen und entsprechenden angezeigten Ausschnitten.

Gemäß einer weiteren Ausbildung umfasst die Erfassungseinheit eine berührungsempfindliche Oberfläche einer Anzeigefläche der Anzeigeeinheit und/oder einen analogen Schalter. Damit ist vorteilhafterweise eine besonders einfache Bedienung möglich.

Insbesondere kann die Erfassungseinheit von einem Touchscreen umfasst sein. Dabei umfasst die Erfassungseinheit insbesondere eine berührungsempfindliche Oberfläche auf einer Anzeigefläche der Anzeigeeinheit. Beispielsweise kann eine Folie über der Anzeigefläche angeordnet sein, mit welcher die Position einer Berührung eines Betätigungsobjekts detektiert werden kann. Bei dem Betätigungsobjekt handelt es sich insbesondere um die Fingerspitze des Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten graphischen Objekt, insbesondere einer Schaltfläche der grafischen Bedienoberfläche, zugeordnet werden. Des Weiteren kann die Dauer der Berührung bei einer bestimmten Position oder innerhalb eines bestimmten Bereichs erfasst werden. Es können ferner Gesten erfasst werden, wobei insbesondere eine Start- und Endposition einer Berührung und eine dazwischen verlaufende Trajektorie erfasst wird.

Durch den Touchscreen kann beispielsweise eine Betätigung einer Schaltfläche implementiert werden, wobei diese angezeigt wird und mittels einer Berührung bei einer der Schaltfläche zugeordneten Position betätigt wird. Ferner kann eine Wischgeste erfasst werden.

Das erfindungsgemäße Fahrzeug umfasst ein Bediensystem gemäß einem der Ansprüche 12 bis 14.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Bediensystems,
- Figur 2: zeigt ein Ausführungsbeispiel einer Anzeige, die mittels eines Ausführungsbeispiels des erfindungsgemäßen Verfahrens erzeugt wurde,
- Figur 3: zeigt ein Ausführungsbeispiel der erfindungsgemäßen Bedienoberfläche und
- Figuren 4A und 4B: zeigen ein weiteres Ausführungsbeispiel einer Anzeige, die mittels eines Ausführungsbeispiels des erfindungsgemäßen Verfahrens erzeugt wurde.

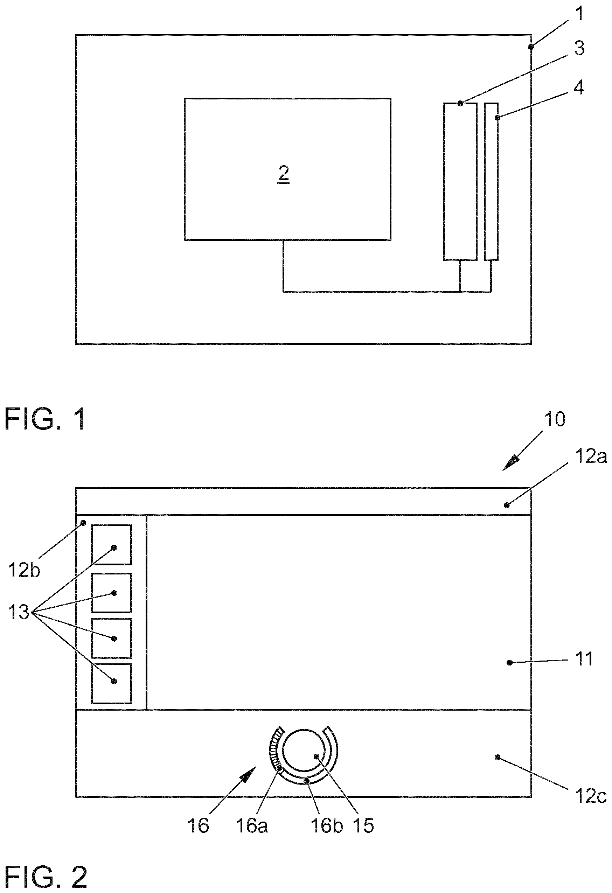

Mit Bezug zu Figur 1 wird ein Fahrzeug mit einem Ausführungsbeispiel des erfindungsgemäßen Bediensystems erläutert.

Ein Fahrzeug 1 umfasst eine Recheneinheit 2, die mit einer Anzeigeeinheit 3 gekoppelt ist. Die Recheneinheit 2 ist ferner mit einer Erfassungseinheit 4 gekoppelt.

Die Erfassungseinheit 4 umfasst bei dem Ausführungsbeispiel eine berührungsempfindliche Oberfläche, die auf einer Anzeigefläche der Anzeigeeinheit 3 angeordnet ist. Damit wird auf an sich bekannte Weise ein Touchscreen bereitgestellt, der hier die Anzeigeeinheit 3 und die Erfassungseinheit 4 umfasst.

Mit Bezug zu Figur 2 wird ein Ausführungsbeispiel einer Anzeige, die mittels eines Ausführungsbeispiels des erfindungsgemäßen Verfahrens erzeugt wurde, erläutert. Dabei wird von dem mit Bezug zu Figur 1 erläuterten Ausführungsbeispiel des erfindungsgemäßen Bediensystems ausgegangen.

Durch die Recheneinheit 2 werden Grafikdaten einer grafischen Bedienoberfläche 14 erzeugt und an die Anzeigeeinheit 3 übertragen, wo sie auf einer Anzeigefläche angezeigt werden. Dabei weist die grafische Bedienoberfläche 14 eine Breite auf, d. h. eine Bedienoberflächenerstreckung in einer ersten Richtung x, wobei die Breite der Bedienoberfläche 14 größer ist als die maximal durch die Anzeigeeinheit 3 darstellbare Anzeige.

Die Grafikdaten werden als Anzeige 10 durch die Anzeigeeinheit 3 angezeigt. Die Anzeige 10 umfasst dabei einen Anwendungsbereich 11 sowie Navigationsbereiche 12a, 12b, 12c. Die Navigationsbereiche 12a bis 12c sind in dem Ausführungsbeispiel am oberen und unteren Rand sowie im linken Bereich der Anzeige 10, angeordnet, während der Anwendungsbereich 11 die restliche Fläche einnimmt. Die Navigationsbereiche 12a bis 12c umfassen grafische Objekte 13, sowie ein Bedienelement 15, und ein Zustandsinformationselement 16. Dabei ist vorgesehen, dass das Bedienelement 15 als Home-Button 15 ausgeführt ist, und einen kreisrunden Umriss aufweist. Parallel zu dem Umriss des Home-Buttons 15 erstreckt sich das Zustandsinformationselement 16 als teilweise ausgebildeter Ring, wobei der Ring konzentrisch um den Home-Button 15 verläuft und nach oben hin geöffnet ist. Das Zustandsinformationselement 16 weist ein hervorgehobenes Segment 16a und ein nicht hervorgehobenes Segment 16b auf. Die Hervorhebung erfolgt nach an sich bekannter Weise durch einen grafischen Effekt, insbesondere durch eine höhere beziehungsweise niedrigere Intensität der Segmente 16a, 16b, relativ zueinander, durch einen Farbkontrast und/oder einen dynamischen Effekt, beispielsweise ein Blinken des hervorgehobenen Segments 16a. In weiteren Ausführungsbeispielen ist ferner ein dreidimensionaler Grafikeffekt vorgesehen.

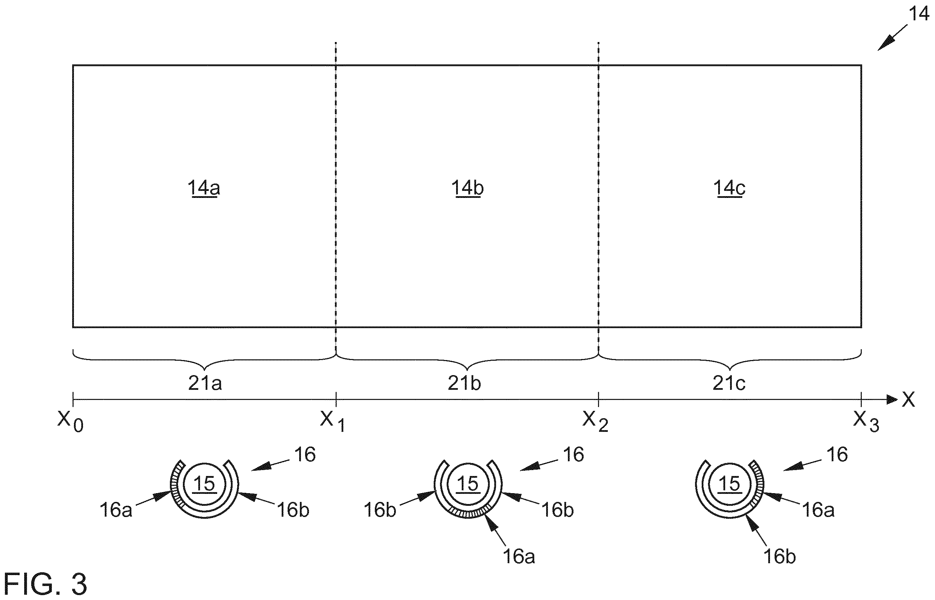

Mit Bezug zu Figur 3 sowie zu den Figuren 1 und 2 wird ein Ausführungsbeispiel des erfindungsgemäßen Verfahrens erläutert.

Die in Figur 3 schematisch dargestellte grafische Bedienoberfläche 14 weist Ausschnitte 14a, 14b, 14c auf. Diese Ausschnitte 14a bis 14c sind so gebildet, dass sie in dem Anwendungsbereich 11 der Anzeige 10, wie in Fig. 2 dargestellt, angezeigt werden können. Das Bediensystem weist in dem Ausführungsbeispiel drei Zustände auf, denen jeweils einer der Ausschnitte 14a bis 14c zugeordnet ist. Dabei wird in Figur 3 nicht dargestellt, dass auch die in den Navigationsbereichen 12a bis 12c der Anzeige 10 darstellbaren Grafikdaten von der grafischen Bedienoberfläche 14 umfasst sind. Die in den Navigationsbereichen 12a bis 12c angezeigten Grafikdaten sind jedoch von der Wahl des Ausschnitts 14a bis 14c unabhängig und sind daher in Fig. 3 nicht dargestellt.

Die Ausschnitte 14a bis 14c sind bei diesem Ausführungsbeispiel so gebildet, dass sie aneinander angrenzen und eine Breite aufweisen, die genau der im Anwendungsbereich 11 der Anzeige 10 darstellbaren Breite entspricht. Dazu wird die grafische Bedienoberfläche 14 entlang einer ersten Richtung x, hier identisch mit einer Breitenerstreckungsrichtung x, in Ausschnitte 14a bis 14c unterteilt. Dabei werden drei Intervalle 21a, 21b, 21c definiert, wobei das erste Intervall 21a von einer ersten Position x₀ bis zu einer zweiten Position x₁ reicht, ein zweite Intervall 21b von der zweiten Position x₁ bis zu einer dritten Position x₂, und ein drittes Intervall 21c von der dritten Position x₂ bis zu einer vierten Position x₃. In analoger Weise können in weiteren Ausführungsbeispielen die Ausschnitte 14a bis 14c in anderer Weise definiert werden, wobei insbesondere eine abweichende Anzahl von Intervallen 21a bis 21c definiert sein kann. Ferner können die Intervalle 21a bis 21c überlappen. Weiterhin können die Ausschnitte 14a bis 14c, alternativ oder zusätzlich, ferner in einer weiteren Richtung angeordnet sein, beispielsweise übereinander statt nebeneinander, sowie schräg zueinander.

Durch die Erfassungseinheit 4 wird eine Bedienhandlung erfasst, die in dem Ausführungsbeispiel eine Berührung der berührungsempfindlichen Oberfläche des Touch-Screens umfasst. Vorgesehen sind in diesem Beispiel Tipp- und Wischgestern. Bei einer Wischgeste ist in dem Ausführungsbeispiel vorgesehen, dass ein Nutzer den Touch-Screen im Bereich der Anzeige 10, insbesondere in dem Anwendungsbereich 11, berührt und eine Wischbewegung nach links oder rechts ausführt. Im Anschluss daran löst der Nutzer die Berührung. In Abhängigkeit von der Richtung der Wischgeste wird eine Änderung des Zustands des Bediensystems vorgenommen, wobei ein Verschieben des in dem Anzeigebereich 11 angezeigten Ausschnitts 14a bis 14c relativ zu der grafischen Bedienoberfläche 14 durchgeführt wird. Zum Beispiel wird nach einer von rechts nach links durchgeführten Wischgeste der Ausschnitt 14a bis 14c angezeigt, der rechts neben dem aktuell angezeigten Ausschnitt 14a bis 14c angeordnet ist. Umgekehrt wird nach einer Wischgeste von links nach rechts der Ausschnitt 14a bis 14c links neben dem derzeit angezeigten Ausschnitt 14a bis 14c angezeigt.

Ferner ist vorgesehen, dass beim Betätigen des Home-Buttons 15 eine Änderung des Zustands durchgeführt wird, und ein anderer Ausschnitt 14a bis 14c angezeigt wird. Insbesondere ist eine Richtung des Wechsels zwischen den Ausschnitten 14a bis 14c vorbestimmt, wobei bei jeder Betätigung des Home-Buttons 15 der nächste Ausschnitt 14a bis 14c in einer bestimmten Richtung angezeigt wird. Es kann also eine feste Richtung vorgegeben sein, in welche der angezeigte Ausschnitt 14a bis 14c beim Betätigen des Home-Buttons 15 verschoben wird. Dabei kann ferner vorgesehen sein, dass beim Erreichen des letzten Ausschnitts 14a bis 14c der grafischen Bedienoberfläche 14 in eine bestimmte Richtung entweder die Richtung des Wechsels der Zustände umgekehrt wird, oder am entgegengesetzten Rand der grafischen Bedienoberfläche 14 fortgesetzt wird.

Dabei ist vorgesehen, dass durch das Zustandsinformationselement 16 angezeigt wird, welcher Zustand des Bediensystems aktuell aktiviert ist. Zu diesem Zweck ist vorgesehen, dass ein Segment 16a des Zustandsinformationselements 16 hervorgehoben wird. Bei dem in Fig. 3 dargestellten Fall ist vorgesehen, dass die Position des hervorgehobenen Segments 16a zu der Anordnung der Ausschnitte 14a bis 14c korrespondiert, und somit angezeigt wird, wo der derzeit angezeigte Ausschnitt 14a relativ zur gesamten Breite der grafischen Bedienoberfläche angeordnet ist. Dabei ist das hervorgehobene Segment 16a relativ zu dem Zustandsinformationselement 16 ganz links angeordnet, wenn der äußerst linke Ausschnitt 14a der Bedienoberfläche 14 angezeigt wird. Entsprechend sind dem mittleren Ausschnitt 14b eine Position im mittleren Bereich des Zustandsinformationselements 16 sowie dem äußerst rechten Ausschnitt 14c ein äußerst rechter Bereich des Zustandsinformationselements 16 zugeordnet.

In weiteren Ausführungsbeispielen kann vorgesehen sein, dass der Übergang der Anzeige von einem ersten zu einem zweiten Ausschnitt 14a bis 14c mittels eines dynamischen Verschiebens dargestellt wird. Dabei wird eine Bewegung des hervorgehobenen Segments 16a entlang des Zustandsinformationselements 16 hin zu seiner neuen Position dargestellt und/oder es wird eine Bewegung der angezeigten grafischen Bedienoberfläche 14 dargestellt, wobei ein kontinuierlicher Übergang von einem ersten zu einem zweiten Ausschnitt 14a bis 14c dargestellt wird. Die Richtung und Geschwindigkeit dieses dynamischen Verschiebens kann vorgegeben sein oder durch die Bedienhandlung definiert sein, z. B. anhand der Richtung und Geschwindigkeit einer Wischgeste.

In weiteren Ausführungsbespielen sind andere Ausbildungen des Zustandsinformationselements 16 und/oder des Home-Buttons 15 vorgesehen. Insbesondere können die Umrisse dabei statt einem Kreis bzw. einem Ring auch einem Umriss eines Polygons folgen. Ferner können andere geometrische Figuren vorgesehen sein. In weiteren Ausführungsbeispielen verläuft das Zustandsinformationselement 16 direkt angrenzend an den Home-Button 15 oder ist das Zustandsinformationselement 16 auf der Oberfläche des Home-Buttons 15 angeordnet.

In weiteren Ausführungsbeispielen kann zudem vorgesehen sein, dass das Zustandsinformationselement linear ausgeprägt ist, beispielsweise als Balken, der z. B. waagerecht oder senkrecht verlaufen kann.

In weiteren Ausführungsbeispielen kann zudem vorgesehen sein, dass das Zustandsinformationselement 16 ferner bedienbar ist, z. B. indem ein Betätigen durch eine Berührung oder eine Wischgeste auf einem Touch-Screen zu einem Wechsel des Zustands, und dadurch des angezeigten Ausschnitts 14a bis 14c führt, wobei der nunmehr aktivierte Zustand in Abhängigkeit von einer Position entlang einer Erstreckung des Zustandsinformationselements 16 bestimmt wird. Zum Beispiel kann vorgesehen sein, dass ein Berühren des Zustandsinformationselements 16 in einem rechten Bereich einen Wechsel zu einem ebenfalls rechts relativ zur breiten Erstreckungsrichtung x der grafischen Bedienoberfläche 14 angeordneten Ausschnitt 14a bis 14c vorgenommen wird. Analog dazu können andere Ausschnitte anderen Positionen der Betätigung zugeordnet sein.

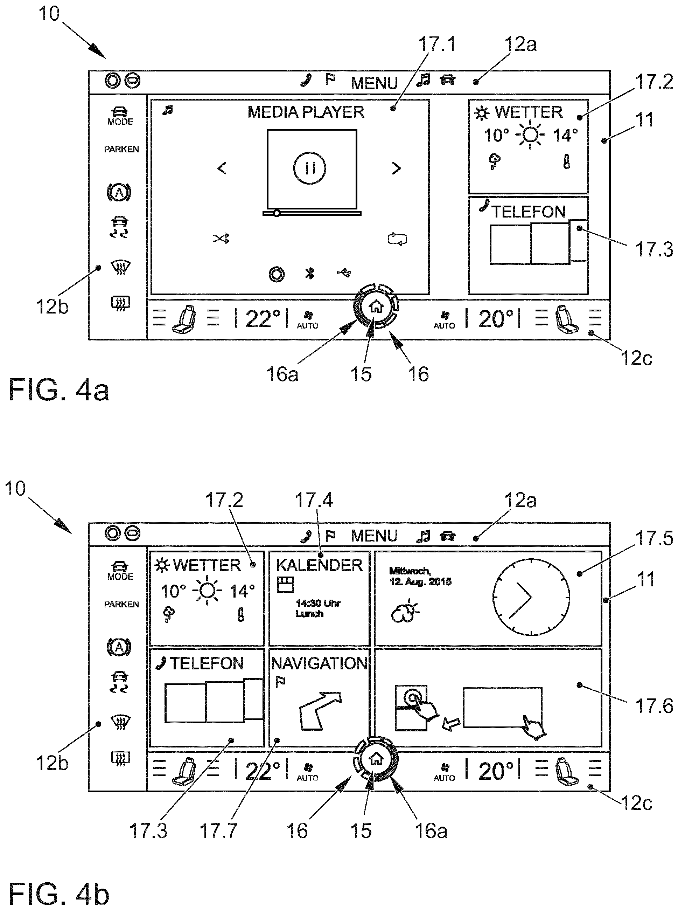

Mit Bezug zu den Figuren 4A und 4B wird ein weiteres Ausführungsbeispiel einer Anzeige, die mittels eines Ausführungsbeispiels des erfindungsgemäßen Verfahrens erzeugt wurde, erläutert. Dabei wird von dem erfindungsgemäßen Bediensystem und dem erfindungsgemäßen Verfahren, wie oben erläutert, ausgegangen.

Analog zu dem in Fig. 2 gezeigten Fall umfasst die Anzeige 10 Navigationsbereiche 12a bis 12c, deren Anzeige bei allen Zuständen des Bediensystems gleich bleibt. Die Anzeige 10 umfasst ferner einen Anwendungsbereich 11, in dem Widget-Elemente 17.1 bis 17.7 anzeigbar sind. Bei dem in Fig. 4a gezeigten Fall umfasst die Anzeige im Anwendungsbereich 11 drei Widget-Elemente 17.1, 17.2, 17.3, nämlich einen Media-Player, eine Wetter-Anwendung, sowie eine Telefonanwendung.

Die Anzeige 10 umfasst ferner ein Bedienelement 15, welches einen runden Rand aufweist und auf dem eine symbolische Darstellung eines Hauses dargestellt wird. Entlang bzw. parallel zu dem Rand des Bedienelements 15 verläuft ein ringförmiges Zustandsinformationselement 16, das in dem dargestellten Fall ringförmig ausprägt ist. Ein hervorgehobenes Segment 16a, hier dargestellt durch einen verdickten Bereich, zeigt an, in welchem Bereich der gesamten Breite der Bedienoberfläche der dargestellte Ausschnitt angeordnet ist. Insbesondere kann sich das hervorgehobene Segment 16a links oder rechts von dem Bedienelement 15 befinden, um darzustellen, dass ein linker oder rechter Ausschnitt einer kontinuierlichen Bedienoberfläche angezeigt wird.

Durch Betätigen des Bedienelements 15 wird eine Änderung des Zustands des Bediensystems bewirkt, wobei in dem Ausführungsbeispiel zwei Zustände vorgesehen sind. Beim Übergang von dem in Fig. 4A dargestellten Fall zu dem in Fig. 4b dargestellten Fall wird das Bedienelement 15 betätigt, und die Anzeige im Anwendungsbereich 11 verändert. Dabei wird eine Verschiebung dargestellt, wobei die Anzeige im Anwendungsbereich 11 nach links gerückt wird; dabei verschwindet das links dargestellte Widget-Element 17.1 aus dem angezeigten Bereich, während die zuvor rechts angezeigten Widget-Elemente 17.2, 17.3 nach links gerückt werden. Ferner gelangen vier weitere Widget-Elemente 17.4 bis 17.7 in den anzeigbaren Bereich des Anwendungsbereichs 11. Es werden nun auch die weiteren Widget-Elemente 17.4 bis 17.7 angezeigt, die einer Kalenderanwendung, einer Uhrzeitanwendung, einer Hilfsinformationsanzeige und einer Navigationsanwendung zugeordnet sind.

Beim Übergang von einem Zustand in den anderen und dem damit verbundenen Wechsel des Ausschnitts 14a bis 14c ist vorgesehen, dass eine Bewegung der im Anwendungsbereich 11 angezeigten Grafik dargestellt wird, während gleichzeitig eine Bewegung des hervorgehobenen Segments 16a dargestellt wird. Die ausgegebene Bewegung ist dabei insbesondere kontinuierlich gebildet, das heißt, es wird ein Verschieben des hervorgehobenen Segmentes 16a entlang des Umrisses des Zustandsinformationselements 16 dargestellt.

In weiteren Ausführungsbeispielen kann eine Verschiebung nach oben oder unten erfolgen, ggf. in Kombination mit einer Verschiebung entlang der Breite.

Ferner kann die Bedienhandlung zum Ändern des Zustands eine Wischgeste umfassen, wobei ein Nutzer die Wischgeste auf dem Touch-Screen im Bereich des Anwendungsbereichs 11 durchführt. Synchron mit der Wischgeste wird eine Verschiebung der angezeigten Widget-Elemente 17.1 bis 17.7 dargestellt, während synchron dazu eine Bewegung des hervorgehobenen Segments 16a dargestellt wird.

In weiteren Ausführungsbeispielen kann zudem vorgesehen sein, dass das Zustandsinformationselement 16 nicht dargestellt wird, sondern nur das hervorgehobene Segment 16a sichtbar ist. Ein nicht hervorgehobenes Segment 16b wird in diesem Fall nicht dargestellt.

In einem weiteren Ausführungsbeispiel ist ferner durch eine Bedienhandlung, beispielsweise ein doppeltes Tippen auf den Bereich eines Widget-Elements 17.1 bis 17.7, eine Vollbilddarstellung erzeugbar. In diesem Fall nimmt eine dem jeweiligen Widget-Element 17.1 bis 17.7 bzw. einer Anwendung im wesentlichen die gesamte Fläche des Anwendungsbereichs 11 oder alternativ der gesamten Anzeige 10 ein. In diesem Fall kann ferner die Anzeige der Navigationsbereiche 12a bis 12c zumindest teilweise fortgesetzt werden und es kann weiter der Home-Button 15 angezeigt werden sowie das Zustandsinformationselement 16. In diesem Fall kann sich das hervorgehobene Segment 16a über einen größeren Bereich erstrecken, insbesondere kann das gesamte Zustandsinformationselement 16 hervorgehoben werden oder es kann ein größeres Segment hervorgehoben werden, insbesondere so, dass dem Nutzer signalisiert wird, dass die Darstellung nicht durch ein Verschieben gegenüber der Anzeigefläche bzw. dem Anwendungsbereich 11 vergrößert werden kann.

### Bezugszeichenliste

- 1: Fahrzeug
- 2: Recheneinheit
- 3: Anzeigeeinheit
- 4: Erfassungseinheit
- 10: Anzeige
- 11: Anwendungsbereich
- 12a, 12b, 12c: Navigationsbereich
- 13: Grafisches Objekt
- 14: Grafische Bedienoberfläche
- 14a, 14b, 14c: Ausschnitt
- 15: Bedienelement; Home-Button
- 16: Zustandsinformationselement
- 16a: Hervorgehobenes Segment des Zustandsinformationselements
- 16b: Nicht hervorgehobenes Segment des Zustandsinformationselements
- 17.1, 17.2, 17.3, 17.4, 17.5, 17.6, 17.7: Widget-Objekt
- 21a, 21b, 21c: Intervall; Ausschnittserstreckung
- x: Erste Richtung; Breitenerstreckungsrichtung
- x₀, x₁, x₂, x₃: Positionen

## Patentansprüche

1. Verfahren zum Betreiben eines Bediensystems, bei dem
Grafikdaten einer grafischen Bedienoberfläche (14) erzeugt werden, wobei die grafische Bedienoberfläche (14) eine Bedienoberflächenerstreckung entlang einer ersten Richtung (x) aufweist; wobei
Grafikdaten einer grafischen Vollbilddarstellung erzeugbar und mittels einer Anzeigeeinheit (3) anzeigbar sind; und
das Bediensystem ferner zumindest zwei Zustände aufweist, wobei jedem Zustand ein bestimmter Ausschnitt (14a, 14b, 14c) der grafischen Bedienoberfläche (14) zugeordnet ist; wobei der Ausschnitt (14a, 14b, 14c) eine Ausschnittserstreckung (21a, 21b, 21c) entlang der ersten Richtung (x) aufweist; wobei, wenn einer der zumindest zwei Zustände des Bediensystems aktiviert ist, der dem aktivierten Zustand zugeordnete Ausschnitt (14a, 14b, 14c) der grafischen Bedienoberfläche (14) mittels der Anzeigeeinheit (3) angezeigt wird; wobei
ein Zustandsinformationselement (16) vorgesehen ist, das einen Umriss einer geometrischen Figur umfasst, wobei
bei einem Zustand, dem ein bestimmter Ausschnitt (14a, 14b, 14c) der grafischen Bedienoberfläche (14) zugeordnet ist, das Zustandsinformationselement (16) so angesteuert wird, dass der aktivierte Zustand des Bediensystems ausgegeben wird, wobei in Abhängigkeit von dem aktivierten Zustand ein Segment (16a) des Umrisses hervorgehoben wird, wobei das Segment (16a) einen bestimmten Abschnitt des Umrisses umfasst; und
bei der Vollbilddarstellung das Zustandsinformationselement (16) so angesteuert wird, dass ein Segment (16a) des Umrisses hervorgehoben wird, das sich über einen größeren Bereich erstreckt.

2. Verfahren gemäß Anspruch 1, wobei die Bedienoberflächenerstreckung entlang einer Breitenerstreckung der Anzeigeeinheit (3) verläuft.

3. Verfahren gemäß einem der vorhergehenden Ansprüche, wobei die Ausschnittserstreckung (21a, 21b, 21c) kleiner oder gleich der Breite einer Anzeigefläche der Anzeigeeinheit (3) ist.

4. Verfahren gemäß einem der vorhergehenden Ansprüche, wobei das Zustandsinformationselement (16) einen vollständig oder teilweise ausgebildeten Ring umfasst.

5. Verfahren gemäß einem der vorhergehenden Ansprüche, wobei eine Bedienhandlung erfasst wird; und in Abhängigkeit von der Bedienhandlung ein anderer als der aktuell aktivierte Zustand des Bediensystems aktiviert wird.

6. Verfahren gemäß Anspruch 5, wobei die Bedienhandlung anhand eines Bedienelements (15) erfasst wird, wobei das Zustandsinformationselement (16) bei dem Bedienelement (15) angeordnet ist.

7. Verfahren gemäß Anspruch 6, wobei das Bedienelement (15) einen Bedienelementrand aufweist und das Zustandsinformationselement (16) entlang des Bedienelementrandes verläuft.

8. Verfahren gemäß einem der Ansprüche 5 bis 7, wobei die Bedienhandlung eine Wischgeste umfasst und beim Aktiveren des anderen Zustands des Bediensystems in Abhängigkeit von der Wischgeste ein dynamisches Verschieben des Ausschnitts (14a, 14b, 14c) ausgegeben wird.

9. Verfahren gemäß einem der Ansprüche 5 bis 8, wobei in Abhängigkeit vom Aktivieren des anderen Zustands des Bediensystems ein anderes Segment (16a) des von dem Zustandsinformationselement (16a) umfassten Umrisses hervorgehoben wird, wobei ein dynamisches Verschieben hervorgehobenen Segments (16a) erzeugt wird.

10. Verfahren gemäß einem der vorhergehenden Ansprüche, wobei die grafische Bedienoberfläche (14) einen Navigationsbereich (12a, 12b, 12c) und einen Anwendungsbereich (11) umfasst; wobei der Navigationsbereich (12a, 12b, 12c) unabhängig von dem angezeigten Ausschnitt (14a, 14b, 14c) mittels der Anzeigeeinheit (3) angezeigt wird.

11. Verfahren gemäß einem der vorhergehenden Ansprüche, wobei bei der Vollbilddarstellung das Zustandsinformationselement (16) so angesteuert wird, dass der gesamte Umriss hervorgehoben wird.

12. Bediensystem mit
einer Recheneinheit (2), durch die Grafikdaten einer grafischen Bedienoberfläche (14) erzeugbar sind, wobei die grafische Bedienoberfläche (14) eine Bedienoberflächenerstreckung entlang einer ersten Richtung (x) aufweist; wobei
Grafikdaten einer grafischen Vollbilddarstellung erzeugbar und mittels einer Anzeigeeinheit (3) anzeigbar sind; und
das Bediensystem ferner zumindest zwei Zustände aufweist, wobei jedem Zustand ein bestimmter Ausschnitt (14a, 14b, 14c) der grafischen Bedienoberfläche (14) zugeordnet ist; wobei der Ausschnitt (14a, 14b, 14c) eine Ausschnittserstreckung (21a, 21b, 21c) entlang der ersten Richtung (x) aufweist; wobei, wenn einer der zumindest zwei Zustände des Bediensystems aktiviert ist, der dem aktivierten Zustand zugeordnete Ausschnitt (14a, 14b, 14c) der grafischen Bedienoberfläche (14) mittels der Anzeigeeinheit (3) anzeigbar ist; wobei
ein Zustandsinformationselement (16) vorgesehen ist, das einen Umriss einer geometrischen Figur umfasst, wobei
bei einem Zustand, dem ein bestimmter Ausschnitt (14a, 14b, 14c) der grafischen Bedienoberfläche (14) zugeordnet ist, das Zustandsinformationselement (16) so ansteuerbar ist, dass der aktivierte Zustand des Bediensystems ausgebbar ist, wobei in Abhängigkeit von dem aktivierten Zustand ein Segment (16a) des Umrisses hervorhebbar ist, wobei das Segment (16a) einen bestimmten Abschnitt des Umrisses umfasst; und
bei der Vollbilddarstellung das Zustandsinformationselement (16) so ansteuerbar ist, dass ein Segment (16a) des Umrisses hervorhebbar ist, das sich über einen größeren Bereich erstreckt.

13. Bediensystem gemäß Anspruch 12, wobei durch eine Erfassungseinheit (4) eine Bedienhandlung erfassbar ist; wobei in Abhängigkeit von der Bedienhandlung ein anderer als der aktuell aktivierte Zustand des Bediensystems aktivierbar ist.

14. Bediensystem gemäß Anspruch 13, wobei die Erfassungseinheit (4) eine berührungsempfindliche Oberfläche einer Anzeigefläche der Anzeigeeinheit (3) und/oder einen analogen Schalter umfasst.

15. Fahrzeug (1) mit einem Bediensystem gemäß einem der Ansprüche 12 bis 14.

## Claims

1. Method for operating an operating system, in which
graphical data of a graphical user interface (14) are generated, wherein the graphical user interface (14) has an operator interface extension along a first direction (x); wherein
graphical data of a graphic, full-screen display can be generated and displayed by means of a display unit (3); and
the operating system further has at least two states, wherein each state is associated with a specific section (14a, 14b, 14c) of the graphical user interface (14); wherein the section (14a, 14b, 14c) has a section extension (21a, 21b, 21c) along the first direction (x); wherein, when one of the at least two states of the operating system is activated, the section (14a, 14b, 14c) of the graphical user interface (14) associated with the activated state is displayed by means of the display unit (3); wherein
a state information element (16) is provided which comprises an outline of a geometric figure, wherein,
in a state with which a specific section (14a, 14b, 14c) of the graphical user interface (14) is associated, the state information element (16) is controlled such that the activated state of the operating system is output, wherein, as a function of the activated state, a segment (16a) of the outline is emphasized, wherein the segment (16a) comprises a specific section of the outline; and,
in the full-screen display, the state information element (16) is controlled in such a way that a segment (16a) of the outline extending over a larger region is emphasized.

2. Method according to claim 1,
wherein
the graphical user interface extension runs along a width extension of the display unit (3).

3. Method according to one of the preceding claims,
wherein
the section extension (21a, 21b, 21c) is less than or equal to the width of a display area of the display unit (3).

4. Method according to one of the preceding claims,
wherein
the state information element (16) comprises a completely or partially formed ring.

5. Method according to one of the preceding claims,
wherein
an operational action is detected; and,
depending upon the operational action, a state different than the currently activated state of the operating system is activated.

6. Method according to claim 5,
wherein
the operational action is detected with the aid of an operating element (15), wherein the state information element (16) is arranged on the operating element (15).

7. Method according to claim 6,
wherein
the operating element (15) has an operating element edge, and the state information element (16) runs along the operating element edge.

8. Method according to one of claims 5 through 7,
wherein
the operational action comprises a swiping gesture, and, when the other state of the operating system is activated as a function of the swiping gesture, a dynamic shifting of the section (14a, 14b, 14c) is output.

9. Method according to one of claims 5 through 8,
wherein,
as a function of the activation of the other state of the operating system, a different segment (16a) of the outline comprised by the state information element (16a) is emphasized, wherein
a dynamic shifting of the emphasized segment (16a) is generated.

10. Method according to one of the preceding claims,
wherein
the graphical user interface (14) comprises a navigation area (12a, 12b, 12c) and an application area (11); wherein
the navigation area (12a, 12b, 12c) is displayed by means of the display unit (3), independently of the displayed section (14a, 14b, 14c).

11. Method according to one of the preceding claims,
wherein,
in the full-screen display, the state information element (16) is controlled in such a way that the entire outline is emphasized.

12. Operating system, with
a computing unit (2) by means of which graphical data of a graphical user interface (14) can be generated, wherein the graphical user interface (14) has a graphical user interface extension along a first direction (x); wherein
graphical data of a graphic, full-screen display can be generated and displayed by means of a display unit (3); and
the operating system further has at least two states, wherein each state is associated with a specific section (14a, 14b, 14c) of the graphical user interface (14); wherein the section (14a, 14b, 14c) has a section extension (21a, 21b, 21c) along the first direction (x); wherein, if one of the at least two states of the operating system is activated, the section (14a, 14b, 14c) of the graphical user interface (14) associated with the activated state can be displayed by means of the display unit (3); wherein
a state information element (16) is provided which comprises an outline of a geometric figure, wherein,
in a state with which a specific section (14a, 14b, 14c) of the graphical user interface (14) is associated, the state information element (16) can be controlled such that the activated state of the operating system can be output, wherein, as a function of the activated state, a segment (16a) of the outline can be emphasized, wherein the segment (16a) comprises a specific section of the outline; and,
in the full-screen display, the state information element (16) can be controlled in such a way that a segment (16a) of the outline extending over a larger region can be emphasized.

13. Operating system according to claim 12,
wherein
an operational action can be detected by a detection unit (4); wherein, depending upon the operational action, a state different than the currently activated state of the operating system can be activated.

14. Operating system according to claim 13,
wherein
the detection unit (4) comprises a touch-sensitive surface of a display area of the display unit (3) and/or an analog switch.

15. Vehicle (1) having an operating system according to one of claims 12 through 14.

## Revendications

1. Procédé d'exploitation d'un système de commande, dans lequel
des données graphiques d'une interface utilisateur graphique (14) sont générées, l'interface utilisateur graphique (14) présentant une étendue d'interface graphique le long d'une première direction (x) ; dans lequel
des données graphiques d'une représentation graphique d'image complète peuvent être générées et affichées au moyen d'une unité d'affichage (3) ; et
le système de commande présente en outre au moins deux états, une partie déterminée (14a, 14b, 14c) de l'interface utilisateur graphique (14) étant associée à chaque état ; la partie (14a, 14b, 14c) présentant une étendue de partie (21a, 21b, 21c) le long de la première direction (x) ; dans lequel, lorsqu'un desdits au moins deux états du système de commande est activé, la partie (14a, 14b, 14c) associée à l'état activé de l'interface utilisateur graphique (14) est affichée au moyen de l'unité d'affichage (3) ;
un élément d'information d'état (16) est prévu, qui comprend un contour d'une figure géométrique, dans lequel
dans un état, qui est associé à une partie déterminée (14a, 14b, 14c) de l'interface utilisateur graphique (14), l'élément d'information d'état (16) est commandé de manière telle que l'état activé du système de commande est émis, un segment (16a) du contour étant mis en évidence en fonction de l'état activé, le segment (16a) comprenant une portion déterminée du contour ; et
lors de la représentation d'image complète, l'élément d'information d'état (16) est commandé de manière telle qu'un segment (16a) du contour, qui s'étend sur une plus grande plage, est mis en évidence.

2. Procédé selon la revendication 1,
dans lequel
l'étendue d'interface utilisateur s'étend le long d'une étendue dans le sens de la largeur de l'unité d'affichage (3).

3. Procédé selon une quelconque des revendications précédentes,
dans lequel
l'étendue de partie (21a, 21b, 21c) est inférieure ou égale à la largeur d'une surface d'affichage de l'unité d'affichage (3).

4. Procédé selon une quelconque des revendications précédentes,
dans lequel
l'élément d'information d'état (16) comprend un anneau conçu de manière complète ou partielle.

5. Procédé selon une quelconque des revendications précédentes,
dans lequel
une manipulation de commande est détectée ; et
en fonction de la manipulation de commande, un autre état que l'état actuellement activé du système de commande est activé.

6. Procédé selon la revendication 5,
dans lequel
la manipulation de commande à l'aide d'un élément de commande (15) est détectée, l'élément d'information d'état (16) étant disposé près de l'élément de commande (15).

7. Procédé selon la revendication 6,
dans lequel
l'élément de commande (15) présente un bord d'élément de commande et l'élément d'information d'état (16) s'étend le long du bord d'élément de commande.

8. Procédé selon une quelconque des revendications 5 à 7,
dans lequel
la manipulation de commande comprend un geste d'effleurement et lors de l'activation de l'autre état du système de commande, un déplacement dynamique de la partie (14a, 14b 14c) est émis en fonction du geste d'effleurement.

9. Procédé selon une quelconque des revendications 5 à 8,
dans lequel
en fonction de l'activation de l'autre état du système de commande, un autre segment (16a) du contour englobant l'élément d'information d'état (16a) est mis en évidence, dans lequel
un déplacement dynamique du segment mis en évidence (16a) est généré.

10. Procédé selon une quelconque des revendications précédentes,
dans lequel
l'interface utilisateur graphique (14) comprend une zone de navigation (12a, 12b, 12c) et une zone d'application (11), dans lequel
la zone de navigation (12a, 12b, 12c) est affichée indépendamment de la partie affichée (14a, 14b, 14c) au moyen de l'unité d'affichage (3).

11. Procédé selon une quelconque des revendications précédentes,
dans lequel
lors de la représentation d'image complète, l'élément d'information d'état (16) est commandé de manière telle que le contour complet est mis en évidence.

12. Système de commande présentant
une unité de calcul (2) qui permet de générer des données graphiques d'une interface utilisateur graphique (14), l'interface utilisateur graphique (14) présentant une étendue d'interface utilisateur le long d'une première direction (x) ; dans lequel
des données graphiques d'une représentation graphique d'image complète peuvent être générées et affichées au moyen d'une unité d'affichage (3) ; et
le système de commande présenté en outre au moins deux états, une partie déterminée (14a, 14b, 14c) de l'interface utilisateur graphique (14) est associée à chaque état ; la partie (14a, 14b, 14c) présentant une étendue de partie (21a, 21b, 21c) le long de la première direction (x) ; dans lequel, lorsqu'un desdits au moins deux états du système de commande est activé, la partie (14a, 14b, 14c) associée à l'état activé de l'interface utilisateur graphique (14) peut être affichée au moyen de l'unité d'affichage (3) ; dans lequel
un élément d'information d'état (16) est prévu, qui comprend un contour d'une figure géométrique, dans lequel
dans un état, qui est associé à une partie déterminée (14a, 14b, 14c) de l'interface utilisateur graphique (14), l'élément d'information d'état (16) peut être commandé de manière telle que l'état activé du système de commande peut être émis, un segment (16a) du contour peut être mis en évidence en fonction de l'état activé, le segment (16a) comprenant une portion déterminée du contour ; et
lors de la représentation d'image complète, l'élément d'information d'état (16) peut être commandé de manière telle qu'un segment (16a) du contour, qui s'étend sur une plus grande plage, peut être mis en évidence.

13. Système de commande selon la revendication 12,
dans lequel
une manipulation de commande peut être détectée par une unité de détection (4) ; dans lequel
un autre état que l'état actuellement activé du système de commande peut être activé en fonction de la manipulation de commande.

14. Système de commande selon la revendication 13,
dans lequel
l'unité de détection (4) comprend une surface tactile d'une surface d'affichage de l'unité d'affichage (3) et/ou un bouton analogique.

15. Véhicule (1) comprenant un système de commande selon une quelconque des revendications 12 à 14.
